(19) Europäisches Patentamt
European Patent Office
Office européen des brevets

(11) Veröffentlichungsnummer: **0 225 434 B1**

(12) **EUROPÄISCHE PATENTSCHRIFT**

(45) Veröffentlichungstag der Patentschrift: **11.11.92**

(51) Int. Cl.[5]: **C08L 77/08**, C09J 177/08, C08G 69/34

(21) Anmeldenummer: **86112025.1**

(22) Anmeldetag: **30.08.86**

# (54) Schmelzklebstoffmischung.

(30) Priorität: **07.10.85 DE 3535732**

(43) Veröffentlichungstag der Anmeldung:
**16.06.87 Patentblatt 87/25**

(45) Bekanntmachung des Hinweises auf die Patenterteilung:
**11.11.92 Patentblatt 92/46**

(84) Benannte Vertragsstaaten:
**AT BE CH DE FR GB IT LI LU NL SE**

(56) Entgegenhaltungen:
**EP-A- 0 061 119**

(73) Patentinhaber: **Henkel Kommanditgesellschaft auf Aktien**
**Postfach 1100 Henkelstrasse 67**
**W-4000 Düsseldorf-Holthausen(DE)**
(84) Benannte Vertragsstaaten:
**BE CH DE FR GB LI LU NL SE AT**

(73) Patentinhaber: **Chem Plast SpA**
**Piazza Vetra 21**
**I-20123 Milano(IT)**
(84) Benannte Vertragsstaaten:
**IT**

(72) Erfinder: **Leoni, Roberto, Dr.**
**Via Simone d'Orsenigo 22**
**I-20135 Milano(IT)**
Erfinder: **Gruber, Werner, Dr.**
**Franz-Kremer-Strasse 7**
**W-4052 Korschenbroich 1(DE)**
Erfinder: **Wichelhaus, Jürgen, Dr.**
**Egenstrasse 60**
**W-5600 Wuppertal 1(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Schmelzkleber auf Basis einer verträglichen Polymermischung aus mindestens zwei Polyamiden und gewünschtenfalls Polyethylen. Als Polyamide werden Polyamide auf Basis dimerer Fettsäuren eingesetzt.

Auf zahlreichen Gebieten der Klebetechnick gewinnen Schmelzkleber zunehmend an Bedeutung. Die Vorteile dieser Klebstoffe sind darin zu sehen, daß sie durch Abkühlen aus der Schmelze die erforderliche Bindungsfestigkeit erreichen und daher für schnell laufende Produktionsvorgänge geeignet sind. Weitere Vorteile bestehen darin, daß Vorrichtungen zum Schutz gegen Lösungsmitteldämpfe entfallen und daß die oftmals langen Trocknungszeiten wäßriger Klebstoffe hier nicht auftreten.

Eine wichtige Klasse von Schmelzklebstoffen sind die Polyamide. Unter diesen haben Polyamide auf Basis dimerisierter Fettsäuren besondere Bedeutung gewonnen. Unter den Polyamiden auf Basis dimerisierter Fettsäuren wiederum kommt Polyamiden, die im Säureanteil dimerisierte Fettsäuren enthalten und im Aminanteil Etherdiamine, aufgrund ihrer guten Tieftemperatureigenschaften besondere Bedeutung zu.

So werden beispielsweise in der DE-A 27 54 233 Copolyamidharze beschrieben, die auf der Säureseite eine spezielle Mischung aus polymeren Fettsäuren (Dimerfettsäuren) und aliphatischen Dicarbonsäuren mit 6 bis 12 C-Atomen enthalten und auf der Basenseite eine Mischung aus gesättigten aliphatischen Diaminen und Polyoxyalkylendiaminen. Die Produkte zeigen eine Sprödigkeitstemperatur von minus 25 °C.

Ähnliche Harze sind im US-Patent 4 218 351 beschrieben. Dieses betrifft Polyamide, die neben üblichen Rohstoffen 5 bis 30 Mol% Dimerfettsäure und 0,25 bis 12,5 Mol% aminogruppentragende Oligomere (Polyoxyalkylendiamine) enthalten.

Bereits in der nichtvorveröffentlichten EP-A-217 145 werden Schmelzklebstoffe auf Basis Dimerfettsäuren, aliphatischen, aromatischen oder cycloalphatischen Diaminen und einseitig N-alkylsubstituierten Diaminen beschrieben. Aus der älteren Anmeldung ist jedoch nicht zu entnehmen, daß derartige Polyamide mit anderen Polyamidharzen gemischt werden können und daß dabei besonders vorteilhafte Produkte entstehen.

Eine sehr spezielle Polyamidmischung ist in der DE-A-31 11 206 (= EP-A-61119) beschrieben. Danach wird ein Polyamid auf Basis von dimierisierten Fettsäuren und Polyetherdiaminen mit einem zweiten Polyamid auf Basis von dimerisierten Fettsäuren und aliphatischen aminogruppentragenden bzw. cycloaliphatischen Aminen mit 2 bis 40 C-Atomen im von Heteroatomen freien C-Gerüst gemischt.

Wenngleich derartige Produkte ein günstiges technisches Eigenschaftsbild zeigen, so bestand doch der Wunsch, unter Beibehaltung der günstigen Tieftemperatureigenschaften, die Substrathaftung, insbesondere auf schwer verklebbaren Substraten zu verbessern und die Schälfestigkeit der mit derartigen Schmelzklebermischungen herstellbaren Verbunde zu erhöhen.

Gegenstand der Erfindung sind daher Schmelzklebstoffmischungen bestehend aus

- 10 bis 90 Gew.-% eines thermoplastischen Polyamids I und 90 bis 10 Gew.-% von einem gewünschtenfalls gemischten thermoplastischen Polyamid II, beide auf Basis dimerisierter Fettsäuren und mit einem Molekulargewicht im Bereich von 5 000 bis 15 000 und gewünschtenfalls
- wachsartigem Polyethylen im Molekulargewichtsbereich von 250 bis 8 000 und einem Schmelzpunkt von 80 bis 115 °C und/oder
- üblichen Hilfsstoffen, dadurch gekennzeichnet, daß das Polyamid I besteht aus

| | |
|---|---|
| a) 25 - 50 Mol% | Dimerfettsäuren deren Anteil an Trimerfettsäure unter 10 Mol% (bezogen auf Dimerfettsäure) und deren Anteil an monomeren Fettsäuren unter 25 Gew.-% (bezogen auf Dimerfettsäure) liegen. |
| b) 0 - 25 Mol% | aliphatischen Dicarbonsäuren mit 6 - 22 C-Atomen |
| c) 25 - 45 Mol% | aliphatischen, aromatischen und/oder cyclischen Diaminen mit 2 - 40 C-Atomen aus der Klasse der di-primären Diamine, der sekundäre Aminogruppen enthaltenden Diamine mit Aklylsubstituenten mit nicht mehr als 8 C-Atomen am N-Atom und/oder der zur zweifachen Amidbildung befähigten heterocyclischen Diamine. |
| d) 5 - 25 Mol% | wenigstens einseitig N-Alkyl-substituierten, zur zweifachen Amidbildung befähigte aliphatische Diamine mit 2 - 10 C-Atomen zwischen den N-Atomen und 10 - 25 C-Atomen im geradkettig oder verzweigten N- Alkylrest |

und daß das Polyamid II aus Polykondensationsprodukten der folgenden Komponenten besteht:

| | |
|---|---|
| a) 20 - 55 Mol% | Dimerfettsäuren deren Anteil an Trimerfettsäure unter 10 Mol% (bezogen auf Dimerfettsäure) und deren Anteil an monomeren Fettsäuren unter 25 Gew.-% (bezogen auf Dimerfettsäure) liegen |
| b) 0 - 25 Mol% | aliphatische Dicarbonsäuren mit 6 - 22 C-Atomen |
| c) 0 - 30 Mol% | Aminocarbonsäuren und/oder deren Lactame mit 6 - 22 C-Atomen und |

d) 20 - 55 Mol% aliphatische, aromatische und/oder cyclische Diamine mit 2 - 40 C-Atomen aus der Klasse der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine

e) 0 - 30 Mol% Polyetherdiamine.

Die erfindungsgemäßen Schmelzklebermischungen bestehen vorzugsweise aus
10 bis 90 Gew.-% Polyamid I
90 bis 10 Gew.-% Polyamid II
bis zu 20 Gew.-% Polyethylen und
bis zu 20 Gew.-& weiteren Hilfsstoffen.

Dabei bestehen bevorzugte Produkte aus
40 bis 60 Gew.-% Polyamid I,
60 bis 40 Gew.-% Polyamid I,
5 bis 20 Gew.-% Polyethylen und
bis zu 10 Gew.-% weiteren Hilfsstoffen.

Die in den Mischungen eingesetzten Polyamide I und II sind Kondensate aus einer Säurekomponente und einer Aminkomponente, wobei sowohl Säurekomponente als auch Aminkomponente gemischt sein können.

Die erfindungsgemäß eingesetzten Polyamide I sind bereits bekannt, sie sind Gegenstand der nicht vorveröffentlichten DE-A-35 31 941 (= EP-A-217 145).

Wichtigster Bestandteil der Säurekomponente der Polyamide I sind Dimerfettsäuren. Unter Dimerfettsäuren werden hier Produkte verstanden, die als Hauptbestandteil das Dimerisationsprodukt einer oder mehrerer ungesättigter Fettsäuren enthalten. Dimerfettsäuren sind dem auf dem Polyamidgebiet tätigen Fachmann bekannt. Es handelt sich um technische Produkte, die als Gemisch vorliegen. Übliche Dimerfettsäuren enthalten einen Anteil von Trimerfettsäuren und einen Anteil von monofunktionellen Fettsäuren. Für die Zwecke der Erfindung sind Dimerfettsäuren geeignet, deren Anteil an Trimerfettsäure unter 10 und insbesondere unter 5 Mol% liegt. Der Anteil an monomeren Fettsäuren liegt unter 25 Gew.-%, vorzugsweise unter 10 Gew.-% und insbesondere unter 5 Gew.-%. Dabei ist es dem Fachmann bekannt, daß ein zu hoher Anteil an Trimerfettsäure, der zur Vergelung des Polyamids führen kann, durch die Zugabe von Kettenabbrechern, das sind insbesondere monofunktionelle Fettsäuren oder monofunktionelle Amine, zum Teil ausgeglichen werden kann. Es gilt hier das allgemeine Fachwissen der Polymerchemie.

Besonders geeignet sind Dimerfettsäuren, die durch Dimerisierung von C-18-Fettsäuren gewonnen worden sind und 36 Kohlenstoffe enthalten. Darüber hinaus können auch kürzerkettige oder längerkettige Dimerfettsäuren eingesetzt werden, soweit verfügbar.

Als weitere Säurekomponente können die Polyamide I aliphatische Dicarbonsäuren mit 6 bis 22 C-Atomen enthalten. Bevorzugt sind hier gesättigte Dicarbonsäuren mit 6 bis 12 C-Atomen, insbesondere lineare Dicarbonsäuren mit endständigen Carboxylgruppen. So sind insbesondere Adipinsäure, Heptandicarbonsäure, Octandicarbonsäure, Azelainsäure, Nonandicarbonsäure, Sebacinsäure, Undecandicarbonsäure, Dodecandicarbonsäure und/oder Brassylsäure sowie deren höhere Homologen geeignet. Zur Auswahl der Art und Menge der Dicarbonsäuren gilt das Folgende:

Werden Polyamide I oder II mit niederem Schmelzpunkt gewünscht, so wird der Fachmann keine aliphatischen Dicarbonsäuren mit 6 bis 22 C-Atomen oder nur geringe Mengen derartiger Säuren einsetzen. Werden hohe Schmelzpunkte gefordert, so werden im Rahmen der vorgegebenen Molmenge größere Anteile an derartigen Dicarbonsäuren eingesetzt, und zwar insbesondere die kürzerkettigen, etwa Adipinsäure.

Als Aminkomponente erhalten die Polyamide I 25 bis 45 Mol% aliphatische, aromatische und/oder cyclische Diamine mit 2 bis 40 C-Atomen aus der Klasse der di-primären Diamine, der sekundären Aminogruppen enthaltenden Diamine mit Alkylsubstituenten mit nicht mehr als 8 C-Atomen am N-Atom und/oder der zur zwei-fachen Amidbildung befähigten heterocyclischen Diamine. Bevorzugt sind Diamine mit 2 bis 20 C-Atomen, insbesondere niedere gerad- oder verzweigtkettige aliphatische oder monocyclische di-primäre Diamin bzw. monocyclische, heterocyclische Diamine. Die hier in Frage kommenden Diamine lassen sich in verschiedene Gruppen aufteilen. Von großer Bedeutung sind beispielsweise die di-primären aliphatischen Diamine mit endständigen Aminogruppen. Unter diesen sind Amine bevorzugt, die in ihrem Kohlenstoffgerüst den vorgenannten Dicarbonsäuren einschließlich Dimerfettsäuren entsprechen, sowie die kürzerkettigen Homologen derartiger Diamine. Wichtige Diamine im einzelnen sind daher Ethylendiamin, Propylendiamin, Hexamethylendiamin und deren Homologe sowie Dimerfettdiamin (herstellbar durch Umwandlung von Dimerfettsäuren in die Dinitrile und anschließende Hydrierung der beiden Nitrilgruppen). Eine weitere Gruppe von Diaminen sind aromatische Diamine. Eingesetzt werden können aromatische Diamine,

die sich von Benzol-, Toluol- oder anders substituierten Aromaten ableiten, zum Beispiel 2,6-Toluylendiamin, 4,4'-Diphenylmethandiamin und/oder Xylylendiamin. Weiter eingesetzt werden können die analogen Cyclohexanderivate.

Eine weitere Klasse von Diaminen, die in den Polyamiden I eingesetzt werden können, sind die Diamine, die eine oder zwei sekundäre Aminogruppen enthalten, die einen Alkylsubstituenten mit nicht mehr als 8 C-Atomen am N-Atom aufweisen. Derartige Diamine leiten sich von den zuvor benannten di-primären aliphatischen Diaminen ab und weisen am N-Atom einen kurzkettigen Alkylsubstituenten auf, insbesondere Methyl, Ethyl oder Propyl.

Eine weitere Gruppe von Diaminen, die in den Polyamiden I eingesetzt werden können, sind die zur zweifachen Amidbildung befähigten heterocyclischen Diamine. Dabei handelt es sich vorzugsweise um aliphatische Heterocyclen. Wichtigster Vertreter dieser Gruppe ist das Piperazin.

Als wichtigsten Bestandteil erhalten die Polyamide I 5 bis 25 mol% wenigstens einseitig N-alkylsubstituierte, zur zweifachen Amidbildung befähigte aliphatische Diamine mit 2 bis 10 C-Atomen zwischen den N-Atomen und 10 bis 25 C-Atomen im geradkettigen oder verzweigten N-Alkylrest. Der Grundkörper dieser Amine kann sich von den zuvor genannten aliphatischen di-primären Diaminen ableiten. Dabei ist der Gundkörper vorzugsweise unverzweigt, das heißt, es handelt sich insbesondere um Ethylendiamin, Propylendiamin, Tetramethylendiamin, Pentamethylendiamin, Hexamethylendiamin oder deren höhere Homologe, die an mindestens einem der N-Atome einen Alkylrest mit 10 bis 25 C-Atomen aufweisen.

Der an mindestens einem der N-Atome befindliche Alkylrest enthält 10 bis 25 C-Atome, er kann linear, verzweigt oder cyclisch sein, wobei jedoch geradkettige Reste bevorzugt sind. Unter den geradkettigen Resten wiederum sind solche mit einer geraden Anzahl an C-Atomen bevorzugt. Die zur zweifachen Amidbildung befähigten, wenigstens einseitig N-alkylsubstituierten aliphatischen Diamine können als definierte Substanz eingesetzt werden. Es ist jedoch bevorzugt, hier Mischungen einzusetzen. So sind Produkte bevorzugt, deren N-Alkylrest Kettenlänge und Kettenlängenverteilung einer hydrierten Fettsäuremischung aufweist. Besonders bevorzugte N-alkylsubstituierte aliphatische Diamine weisen N-Alkylsubstituenten auf, deren Kettenlänge der einer hydrierten Talgfettsäure oder einer hydrierten Tallölfettsäure entspricht.

Die Polyamide I und II können Säurekomponenten und Aminkomponenten in stöchiometrischen Mengen enthalten. Für den Einsatz als Schmelzkleber wird es jedoch in der überwiegenden Anzahl der Fülle gewünscht, daß restliche Aminogruppen oder restliche Säuregruppen vorhanden sind. Um dies zu erreichen, wird der Fachmann einen Säure- oder Basenüberschuß einsetzen, der jedoch nicht mehr als 10 Äquivalentprozent aller funktionellen Gruppen ausmacht. Basenterminierte Harze weisen Aminzahlen bis etwa 50, vorzugsweise von 2 bis 20 und insbesondere von 2 bis 15 auf. Säureterminierte Harze sollten eine Säurezahl im Bereich bis etwa 20, vorzugsweise von 2 bis 10 besitzen.

Die in den Polyamidharzen II eingesetzten Dimerfettsäuren, Dicarbonsäuren und aliphatischen, aromatischen und/oder cyclischen Diaminen mit 2 - 40 C-Atomen aus der Klasse der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine entsprechen den Verbindungen, die bei den Polyamiden I eingesetzt werden.

Die Polyamide II können darüber hinaus noch Aminocarbonsäuren enthalten. Bevorzugte Aminocarbonsäuren sind Aminocarbonsäuren mit endständigen funktionellen Gruppen. Unter diesen wiederum sind Produkte bevorzugt, die 6 - 20 C-Atome aufweisen, insbesondere in unverzweigter Kette. Besonders wichtige Aminocarbonsäuren sind die 6-Aminocapronsäure, die 11-Amino-undecansäure, die 12-Aminolaurinsäure sowie deren Homologe. Die genannten Aminocarbonsäuren können auch als Lactame eingesetzt werden.

Neben den unter d) aufgeführten Aminokomponenten können die Polyamide II auch Polyetherdiamine in Mengen bis zu 30 Mol% enthälten. Geeignet sind Polyetherdiamine mit endständigen, an einem Alkylrest der Kettenlänge $C_2$ bis $C_6$ gelegenen primären Aminogruppen, wobei die Alkylreste über eine Polyetherkette des Molekulargewichts von etwa 100 - 5.000, vorzugsweise 300 - 2.000 miteinander verbunden sind. Dabei kann sich die Polyetherkette von Ethylenoxid, Propylenoxid, Buten-1-oxid oder auch von Tetrahydrofuran ableiten. Bevorzugt sind Polyetherdiamine auf Basis Polypropylenoxid.

Erfindungsgemäß können säureterminierte wie auch Aminogruppen terminierte Polyamide I beziehungsweise Polyamide II miteinander gemischt werden. Um jedoch einen Viskositätsaufbau bei der Verarbeitung in der Schmelze zu vermeiden, ist es bevorzugt, Polyamide I und Polyamide II mit gleicher Endgruppenart zu vermischen.

Die eingesetzten Polyamidharze I und II weisen ein Molekulargewicht (Zahlenmittel) im Bereich von 5.000 bis 15.000, vorzugsweise von 8.000 bis 12.000 auf. Dabei wird der Fachmann zur Erzielung hoher Molekulargewichte Säure- und Basenkomponente in möglichst äquivalenten Mengen einsetzen, wohingegen zur Erreichung niederer Molekulargewichte mit Überschüssen einer Komponente gearbeitet werden kann.

Eine weitere Möglichkeit zur Erniedrigung des Molekulargewichts ist die Zugabe von Kettenabbrechern wie monofunktionellen Fettsäuren oder monofunktionellen Aminen. Andererseits kann das Molekulargewicht durch einen gewissen Anteil an trifunktionellen Komponenten, etwa Trimerfettsäure, gesteigert werden.

Die erfindungsgemäßen Schmelzklebermischungen können als weiteren Bestandteil Polyethylen enthalten. Bevorzugt werden hier niedermolekulare, wachsartige Polyethylene eingesetzt. Diese sollen ein Molekulargewicht von etwa 250 bis etwa 8.000 aufweisen. Eingesetzt werden können lineare, aber auch verzweigte Polyethylene, sofern sie wachsartigen Charakter aufweisen. Weiterhin geeignet sind oxidierte Polyethylene, die aufgrund enständiger Carboxylgruppen eine gewisse Säurezahl aufweisen. Auch Mischungen der genannten Polyethylene, gewünschtenfalls mit Paraffinwachsen, können hier eingesetzt werden. Der Fachmann kann hier als Auswahlkriterium den Schmelzpunkt heranziehen. Geeignete Produkte haben Schmelzpunkte im Bereich von 80 bis 115 °C, vorzugsweise von 90 bis 110 °C. Hier haben sich insbesondere Produkte bewährt, die um 106 °C schmelzen.

Die erfindungsgemäßen Schemlzklebermischungen können weiterhin Hilfsstoffe enthalten. Hier sind in erster Linie Verträglichkeitsverbesserer zu nennen. Als Verträglichkeitsverbesserer sind Ester von Fettsäuren, insbesondere deren Ester mit primären Alkoholen wie Methanol, Ethanol und dergleichen geeignet.

Es kann weiterhin günstig sein, auch Weichmacher mitzuverwenden. Geeignete Weichmacher sind Weichmacher auf Basis von Phthalsäureestern, Epoxidweichmacher, Polyesterweichmacher oder die als Weichmacher gängigen Phosphorsäuretriester. Weiterhin können organische Lösungsmittel miteingesetzt werden. Nach einer weiteren Ausführungsform der Erfindung können auch Klebrigmacher wie verschiedene, dem Fachmann unter diesem Oberbegriff bekannte Harze eingesetzt werden. Die genannten Hilfsstoffe werden im allgemeinen in Mengen von nicht mehr als 20 Gew.-%, bezogen auf die verträglichen Mischungen insgesamt, eingesetzt. Häufig sind jedoch 2 bis 8 Gew.-% und insbesondere 3 bis 5 Gew.-% ausreichend.

Neben den vorgenannten Bestandteilen können die erfindungsgemäßen verträglichen Mischungen darüber hinaus noch weitere in Klebstoffen gängige Hilfsstoffe enthalten. So können etwa Stabilisatoren gegen Licht- und Wärmeabbau (Alterungsschutzmittel), zum Beispiel Antioxidantien, Füllstoffe, organischer oder anorganischer Natur, Farbpigmente, Konservierungsmittel oder Fungicide in untergeordneten Mengen beigefügt sein. Viele dieser Zusätze werden üblicherweise in Mengen von 0,05 bis 2 Gew.-% beigefügt.

Zur Herstellung der erfindungsgemäßen verträglichen Polymermischungen können 2 Wege beschritten werden. Zum einen ist es möglich, die Ausgangskomponenten vorzugsweise nach mechanischer Vorverkleinerung in den gewünschten Mischungsverhältnissen gemeinsam über den Schmelzpunkt zu erwärmen und durch einfaches Rühren zu vermischen. Ein weiterer Herstellungsweg geht von Lösungen der Ausgangskomponenten etwa in aromatischen Lösungsmitteln wie Toluol oder auch in DMF oder ähnlichen Lösungsmitteln aus. Die Lösungen werden vermengt und die Schmelzkleber daraus durch Abdunsten des Lösungsmittels erhalten.

Die erfindungsgemäßen Schmelzklebermischungen besitzen einen Erweichungspunkt (bestimmt nach ASTME-28) im Bereich von 60 bis 200 °C, vorzugsweise von 80 bis 150 °C. Die Tieftemperatureigenschaften der Mischungen sind ausgezeichnet. Die Bedingungen des Mandrell-Tests (Wicklung eines Prüfkörpers der Dimension 200 mm x 25,4 mm und einer Dicke von 1 mm um einen Messingzylinder mit einem Durchmesser von 25,4 mm um 360 °) werden bei minus 30 °C, vorzugsweise bei minus 40 °C erfüllt. Ein besonderer Vorteil der Produkte liegt in ihrer verbesserten Substrathaftung. So werden im Vergleich zu den Einzelkomponenten und zum Stand der Technik bessere Substrathaftungen und insbesondere höhere Zugscherfestigkeiten bei schwer zu verklebenden Materialien wie PVC, Polysterfolien oder auch auf Aluminium festgestellt. Darüber hinaus ist die Wasseraufnahme der Produkte wesentlich geringer als dies bei Polyamidharzen der Fall ist, die keine Diamine enthalten, welche keinen erfindungsgemäß definierten N-Alkylrest aufweisen.

Die Applikation der erfindungsgemäßen Schmelzklebstoffe erfolgt im allgemeinen aus der Schmelze über Förder- oder Dosiereinrichtungen. Die Schmelze kann auf Vorrat gehalten werden oder durch Abschmelzen von Formkörpern wie Zylindern, Fäden, Drähten oder sonstigen Profilen gewonnen werden. Unmittelbar nach dem Auftragen des flüssigen Klebstoffilms sollten die Klebeflächen unter leichtem Druck miteinander verbunden werden, bis die eigentliche Klebung eingetreten ist.

Darüber hinaus ist es selbstverständlich möglich, in geeigneten Lösungsmitteln die neuen Blends zu lösen und so auf den zu verklebenden Flächen zu applizieren. In der Regel ist es dann notwendig, durch Wärmeeinwirkung den klebfähigen Zustand herbeizuführen. Dies gilt insbesondere für den Fall, daß eine der beiden zu verklebenden Flächen nicht durchlässig für das verwendete Lösungsmittel ist. Schließlich ist es auch möglich, in geeigneter wäßriger Dispersion den Klebstoff aufzutragen und nach Abdunsten des Wassers die eigentliche Verklebung unter Wärmeeinwirkung durchzuführen.

**Beispiele**

In einem ersten Verfahrensschritt wurden Polyamide I hergestellt. Die Kondensation wurde in einem tubulierten Glaskolben unter Stickstoffatmosphäre und Rühren vorgenommen. Die vorgelegten Carbonsäuren wurden zunächst auf etwa 60 °C erhitzt und dann die weiteren Reaktionskomponenten zugegeben. Innerhalb einer Stunde wurde dann auf 230 °C aufgeheizt und eine Stunde bei dieser Temperatur gehalten. Dann wurde während der nächsten Stunde bei konstanter Temperatur auf 15 mbar evakuiert. Nach Abkühlen auf 120 °C wurde das Reaktionsprodukt abgelassen und zur Bestimmung der Eigenschaften isoliert.

In der folgenden Tabelle sind in Abhängigkeit von der laufenden Nummer des Beispiels die eingesetzten Mengen in g angegeben sowie Amin- und Säurezahl des Reaktionsprodukts. Auch sind der Erweichungspunkt (R + B, ASTM E-28) sowie die für die bei tiefen Temperaturen gefundenen Werte für die Flexibilität in °C aufgeführt. Diese wurde durch den Mandrell-Test bestimmt, indem ein Prüfkörper der Dimension 20 mm x 170 mm und einer Dicke von 1 mm um einen Messingzylinder mit einem Durchmesser von 25,6 mm um 360 ° gewickelt wurde. Die Prüfungen erfolgten bei abnehmenden Temperaturen (Prüfkörper und Zylinder im Temperaturgleichgewicht), um die niedrigste Temperatur festzustellen, bei der drei von fünf Prüfkörpern den Wickeltest ohne Bruch überstanden.

| Beispiel | I 1)<br>g | I 2)<br>g | I 3)<br>g |
|---|---|---|---|
| Dimerfettsäure | 285 | 236 | 236 |
| Azelainsäure | - | 16 | 16 |
| Ethylendiamin | 24 | 24 | 18 |
| N-Alkyl-propylen-diamin | 33,4 | 33,4 | 75,2 |
| Erweichungspunkt | 100 °C | 140 °C | 120 °C |
| Aminzahl | 4,1 | 3,2 | 6,0 |
| Flexibilität | -35 °C | -40 °C | -45 °C |

Erläuterung:

Das eingesetzte N-Alkyl-propylendiamin weist einen Alkylrest R auf, der in Kettenlänge und Kettenlängenverteilung der Tallölfettsäure entspricht.

$$\underset{\displaystyle /\atop R}{HN} - CH_2 - CH_2 - CH_2 - NH_2$$

Nach dem gleichen Verfahren wurden Polyamide II hergestellt. Basis war eine handelsübliche dimerisierte Fettsäure (3 Gew.-% Monomere, 96 Gew.-% Dimere, Rest höherpolymere Anteile). Auf 100 Gewichtsteile dieser Säure wurden eingesetzt:

| | |
|---|---|
| 8,3 | Gewichteile Diaminoethan und |
| 25,7 | Gewichtsteile Dimerfettdiamin (Polyamid II 1) bzw. |
| 28 | Gewichtsteile Azelainsäure, |
| 5,3 | Gewichtsteile Diaminoethan und |
| 21 | Gewichtsteile Piperazin (Polyamid II 2) |

Die Schmelzklebermischungen wurden durch Zusammenschmelzen und intensivem Rühren der Polyamid I 1) bis I 2) und der Polyamide II 1) und II 2) sowie von wachsartigem handelsüblichen Polyethylen (Erweichungspunkt 106 °C) hergestellt.

Die folgenden Prüfverfahren wurden zur Beurteilung herangezogen:

1. R + B (Erweichungspunkt)

Der Erweichungspunkt °C wurde nach der Ring + Ball-Methode (R + B) nach ASTM E-28 gemessen.

2. Viskosität

Die Viskosität in mPa.s wurde unter Verwendung eines Brookfield Thermocel Viscosimeters Typ RVT mit der Spindel SC 4-27 bei 210 °C gemessen.

3. Zugscherfestigkeit

Die Zugscherfestigkeit wurde in Anlehnung an DIN 53283 bestimmt.
Werkstoff : 1. Aluminium : Al Cu Mg 2 x platiniert

4. Schälfestigkeit

Die Schälfestigkeit wurde als T-peel-Test durchgeführt.

| | |
|---|---|
| Werkstoff : | Polyethylen vernetzt<br>Mylar-Folie<br>WPVC, PUR |
| Prüfkörper : | 120 x 25 x 0,2 mm<br>Überlappung 80 mm |
| Vorbehandlung : | Coronabehandlung nur bei Pe u. Mylar |
| Verklebung : | Überlappungsfläche einseitig mit Klebstoff beschichtet und direkt verklebt |
| Konditionierung : | 24 h bei 20 °C |
| Temperatur- und Prüfgeschwindigkeit: | 20 °C bzw. 0 °C, 100 mm Abzugsgeschwindigkeit |

5. Mandrell-Test

Ein Film mit den Maßen 200 x 25,4 x 1 mm wird um einen Dorn mit dem Durchmesser 25,4 mm um 360 ° gebogen. Dorn und Teststreifen werden 4 Std. bei der Prüftemperatur konditioniert. Es wurden jeweils 10 Prüfkörper geprüft.

In der nachfolgenden Tabelle sind die eingesetzten Mengen der Polyamide I und der Polyamid II angegeben. Es folgen die Viskositäten bei 210 °C in mPa.s, die Erweichungstemperatur R + B in °C, der Mandrell-Test (50 % Bruch in °C).

Tabelle 1

| Beispiel Nr. | 1 | 2 | 3 |
|---|---|---|---|
| Polyamid I 1) | 60 % | - | - |
| Polyamid I 2) | - | 50 % | - |
| Polyamid I 3) | - | - | 40 % |
| Polyamid II 1) | 30 % | 20 % | - |
| Polyamid II 2) | - | 15 % | 40 % |
| Polyethylen | 10 % | 15 % | 20 % |
| Viskosität | 4000 mPa.s | 5000 mPa.s | 4500 mPa.s |
| Erweichungspunkt | 97 °C | 98 °C | 108 °C |
| Mandrell-Test | -45 °C | -50 °C | -55 °C |

T a b e l l e 2

| Beispiel | 1 | 2 | 3 | |
|---|---|---|---|---|
| Zugscherfestigkeit Al/Al ($N/mm^2$) | 8,5 | 9,6 | 10,5 | |
| Schälfestigkeit PE/PE | 180 | 250 | 200 | N/25 mm |
| Schälfestigkeit an Polyesterfolie (Mylar) | 120 | 150 | 120 | N/25 mm |
| Schälfestigkeit WPVC/WPVC | 80 | 120 | 120 | N/25 mm |
| Schälfestigkeit PUR/PUR | 40 | 50 | 50 | N/25 mm |

## Patentansprüche

**1.** Schmelzklebstoffmischungen bestehend aus

- 10 bis 90 Gew.-% eines thermoplastischen Polyamids I und 90 bis 10 Gew.-% von einem gewünschtenfalls gemischten thermoplastischen Polyamid II, beide auf Basis dimerisierter Fettsäuren und mit einem Molekulargewicht (Zahlenmittel) im Bereich von 5 000 bis 15 000 und gewünschtenfalls
- wachsartigem Polyethylen im Molekulargewichtsbereich von 250 bis 8 000 und einem Schmelzpunkt von 80 bis 115 °C und/oder
- üblichen Hilfsstoffen, dadurch gekennzeichnet, daß das Polyamid I besteht aus

  a) 25 - 50 Mol% Dimerfettsäuren deren Anteil an Trimerfettsäure unter 10 Mol% (bezogen auf Dimerfettsäure) und deren Anteil an monomeren Fettsäuren unter 25 Gew.-% (bezogen auf Dimerfettsäure) liegen.

  b) 0 - 25 Mol% aliphatischen Dicarbonsäuren mit 6 - 22 C-Atomen

  c) 25 - 45 Mol% aliphatischen, aromatischen und/oder cyclischen Diaminen mit 2 - 40 C-Atomen aus der Klasse der di-primären Diamine, der sekundäre Aminogruppen enthaltenden Diamine mit Aklylsubstituenten mit nicht mehr als 8 C-Atomen am N-Atom und/oder der zur zweifachen Amidbildung befähigten heterocyclischen Diamine.

| | |
|---|---|
| d) 5 - 25 Mol% | wenigstens einseitig N-Alkyl-substituierten zur zweifachen Amidbildung befähigten aliphatischen Diamine mit 2 - 10 C-Atomen zwischen den N-Atomen und 10 - 25 C-Atomen im geradkettig oder verzweigten N- Alkylrest |

und daß das Polyamid II aus Polykondensationsprodukten der folgenden Komponenten besteht:

| | |
|---|---|
| a) 20 - 55 Mol% | Dimerfettsäuren deren Anteil an Trimerfettsäure unter 10 Mol% (bezogen auf Dimerfettsäure) und deren Anteil an monomeren Fettsäuren unter 25 Gew.-% (bezogen auf Dimerfettsäure) liegen |
| b) 0 - 25 Mol% | aliphatische Dicarbonsäuren mit 6 - 22 C-Atomen |
| c) 0 - 30 Mol% | Aminocarbonsäuren und/oder deren Lactame mit 6 - 22 C-Atomen und |
| d) 20 - 55 Mol% | aliphatische, aromatische und/oder cyclische Diamine mit 2 - 40 C-Atomen aus der Klasse der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine |
| e) 0 - 30 Mol% | Polyetherdiamine. |

**2.** Schmelzklebermischungen nach den Ansprüchen 1 und 2, dadurch gekennzeichnet, daß sie bestehen aus
10 bis 90 Gew.-% Polyamid I
90 bis 10 Gew.-% Polyamid II und
0 bis 20 Gew.-% Polyethylen und
0 bis 20 Gew.-% weiteren Hilfsstoffen.

**3.** Schmelzklebstoffmischungen nach den Ansprüchen 1 und 2, dadurch gekennzeichnet, daß sowohl bei Polyamid I als auch bei Polyamid II der Säure- bzw. Basenüberschuß nicht mehr als 10 Äquivalentprozent aller funktionellen Gruppen ausmacht, wobei vorzugsweise basenterminierte Harze Aminzahlen im Bereich bis 50, vorzugsweise 2 bis 20 und insbesondere 2 bis 15 aufweisen, während säureterminierte Harze Säurezahlen im Bereich bis 20, vorzugsweise von 2 bis 10 besitzen.

**4.** Schmelzklebstoffmischungen nach den Ansprüchen 1 bis 3, dadurch gekennzeichnet, daß Polyamid und Polyamid II Endgruppen der gleichen Art aufweisen.

**5.** Schmelzklebstoffmischungen nach den Ansprüchen 1 bis 4, dadurch gekennzeichnet, daß die Polyamide I und II ein Molekulargewicht im Bereich von 8 000 bis 12 000 besitzen.

**6.** Schmelzklebstoffmischungen nach den Ansprüche 1 bis 5, dadurch gekennzeichnet, daß sie einen Erweichungspunkt (ASTME-28) im Bereich von 60 bis 200 °C, vorzugsweise von 80 bis 150 °C besitzen.

**7.** Schmelzklebstoffmischungen nach den Ansprüchen 1 bis 6, dadurch gekennzeichnet, daß die Polyamide I und II als Komponente (a) technische Dimerfettsäuren mit einem Gehalt an Trimerfettsäuren unter 10 Mol%, vorzugsweise nicht über 5 Mol%, gewünschtenfalls neben beschränkten Mengen an Monocarbonsäuren enthalten.

**8.** Schmelzklebstoffmischungen nach den Ansprüchen 1 bis 7, dadurch gekennzeichnet, daß die Polyamide I und II als Komponente (b) gesättigte aliphatische Dicarbonsäuren mit 6 bis 12 C-Atomen enthalten.

**9.** Schmelzklebstoffmischungen nach den Ansprüchen 1 bis 8, dadurch gekennzeichnet, daß die Polyamide I und II als Komponente (c) Diamine mit 2 bis 20 C-Atomen enthalten, die insbesondere niedere gerad- oder verzweigtkettige aliphatische oder monocyclische di-primäre Diamine beziehungsweise monocyclische heterocyclische Diamine sind.

**10.** Schmelzklebstoffmischungen nach den Ansprüchen 1 bis 9, dadurch gekennzeichnet, daß als Polyethylen ein lineares oder gewünschtenfalls verzweigtes oder anoxidiertes Polyethylen mit wachsartigem Charakter und einem Schmelzpunkt im Bereich von 90 °C - 110 °C, mit Molekulargewicht 250 - 8 000, vorzugsweise 300 - 2 000, eingesetzt wird.

**11.** Schmelzklebstoffmischungen nach den Ansprüchen 1 bis 10, dadurch gekennzeichnet, daß als Hilfsstoffe Weichmacher, Lösungsmittel, Verträglichkeitsverbesserer, Pigmente, Alterungsschutzmittel, Klebrigmacher und/oder Füllstoffe eingesetzt werden.

## Claims

**1.** Hotmelt mixtures consisting of

- 10 to 90% by weight of a thermoplastic polyamide I and 90 to 10% by weight of an, if desired, mixed thermoplastic polyamide II, both based on dimerized fatty acids and having a molecular weight (number average) in the range from 5,000 to 15,000 and, if desired,
- wax-like polyethylene having a molecular weight of 250 to 8,000 and a melting point of 80 to 115 ° C and/or
- standard auxiliaries,

characterized in that polyamide I consists of

a) 25 to 50 mol-% dimer fatty acids in which the percentage content of trimer fatty acid is below 10 mol-% (based on dimer fatty acid) and the percentage content of monomeric fatty acids is below 25% by weight (based on dimer fatty acid)
b) 0 to 25 mol-% aliphatic $C_{6-22}$ dicarboxylic acids,
c) 25 to 45 mol-% aliphatic, aromatic and/or cyclic $C_{2-40}$ diamines from the group comprising diprimary diamines, diamines containing secondary amino groups and alkyl substituents with no more than 8 C atoms on the nitrogen atom and/or heterocyclic diamines capable of diamide formation,
d) 5 to 25 mol-% aliphatic diamines capable of diamide formation and N-alkyl-substituted on at least one side, containing from 2 to 10 C atoms between the N atoms and from 10 to 25 C atoms in the linear or branched N-alkyl group,

and in that polyamide II consists of polycondensation products of the following components:

a) 20 to 55 mol-% dimer fatty acids in which the percentage content of trimer fatty acid is below 10 mol-% (based on dimer fatty acid) and the percentage content of monomeric fatty acids is below 25% by weight (based on dimer fatty acid)
b) 0 to 25 mol-% aliphatic $C_{6-22}$ dicarboxylic acids,
c) 0 to 30 mol-% $C_{6-22}$ aminocarboxylic acids and/or lactams thereof,
d) 20 to 55 mol-% aliphatic, aromatic and/or cyclic $C_{2-40}$ diamines from the group comprising diprimary diamines, diamines containing secondary amino groups and alkyl substituents with no more than 8 C atoms at the nitrogen atom and/or heterocyclic diamines capable of diamide formation,
e) 0 to 30 mol-% polyether diamines.

**2.** Hotmelt mixtures as claimed in claims 1 and 2 characterized in that they consist of
10 to 90% by weight polyamide I,
90 to 10% by weight polyamide II,
0 to 20% by weight polyethylene and
0 to 20% by weight further auxiliaries.

**3.** Hotmelt mixtures as claimed in claims 1 and 2 characterized in that, both in polyamide I and in polyamide II, the excess of acid or base makes up no more than 10 equivalent percent of all functional groups, base-terminated resins having amine values of up to 50, preferably of 2 to 20 and more preferably of 2 to 15 while acid-terminated resins have acid values of up to 20 and preferably of 2 to 10.

**4.** Hotmelt mixtures as claimed in claims 1 to 3, characterized in that polyamide I and polyamide II have terminal groups of the same kind.

**5.** Hotmelt mixtures as claimed in claims 1 to 4, characterized in that the polyamides I and II have a molecular weight of 8,000 to 12,000.

**6.** Hotmelt mixtures as claimed in claims 1 to 5, characterized in that they have a softening point (ASTME-28) of 60 to 200 ° C and preferably of 80 to 150 ° C.

7. Hotmelt mixtures as claimed in claims 1 to 6, characterized in that polyamides I and II contain as component (a) technical dimer fatty acids incorporating less than 10 mol-% and preferably no more than 5 mol-% of trimer fatty acids, if desired in addition to limited quantities of monocarboxylic acids.

8. Hotmelt mixtures as claimed in claims 1 to 7, characterized in that polyamides I and II contain as component (b) saturated aliphatic dicarboxylic acids containing from 6 to 12 C atoms.

9. Hotmelt mixtures as claimed in claims 1 to 8 characterized in that polyamides I and II contain as component (c) $C_{2-20}$ diamines which are in particular lower straight-chain or branched-chain aliphatic or monocyclic diprimary diamines or monocyclic heterocylic diamines.

10. Hotmelt mixtures as claimed in claims 1 to 9, characterized in that the polyethylene used is a linear or, if desired, branched or partly oxidized wax-like polyethylene having a melting point of 90 to 110 °C and a molecular weight of 250 to 8,000 and preferably of 300 to 2,000.

11. Hotmelt mixtures as claimed in claims 1 to 10, characterized in that plasticizers, solvents, compatibility enhancers, pigments, antiagers, tackifiers and/or fillers are used as auxiliaries.

**Revendications**

1. Mélanges de colle à fusion se composant de
   - 10 à 90 % d'un polyamide thermoplastique I et 90 à 10 % en poids d'un polyamide thermoplastique II, éventuellement mélangé, tous deux à base d'acides gras dimérisés et dont le poids moléculaire (moyenne numérique) se situe dans la plage allant de 5.000 à 15.000 et, le cas échéant,
   - un polyéthylène cireux dont le poids moléculaire est compris dans l'intervalle de 250 à 8.000 et dont le point de fusion se situe entre 80 et 115 °C et/ou
   - d'adjuvants usuels, caractérisés en ce que le polyamide I est constitué de

| | |
|---|---|
| a) 25 à 50 moles % | d'acide gras dimère dont la proportion d'acides gras trimères est inférieure à 10 moles % (par rapport à l'acide gras dimère) et dont la proportion d'acides gras monomères est inférieure à 25 % en poids (par rapport à l'acide gras dimère). |
| b) 0 à 25 moles % | d'acides dicarboxyliques aliphatiques comportant 6 à 22 atomes de C |
| c) 25 à 45 moles % | de diamines aliphatiques, aromatiques et/ou cycliques comportant 2 à 40 atomes de C, faisant partie de la classe des diamines di-primaires, des diamines comprenant des groupes amino secondaires avec des substituants alkyle ne comportant pas plus de 8 atomes de C sur l'atome de N et/ou des diamines hétérocycliques aptes à la formation double d'amides. |
| d) 5 à 25 moles % | de diamines aliphatiques N-alkylsubstituées au moins d'un côté, aptes à la formation double d'amides avec, 2 à 10 atomes de C entre les atomes de N et 10 à 25 atomes de C dans le radical N-alkyle à chaîne droite ou ramifiée |

et en ce que le polyamide II se compose de produits de polycondensation des composants suivants:

| | |
|---|---|
| a) 20 à 55 moles % | d'acide gras dimère dont la proportion en acides gras trimères est inférieure à 10 moles % (par rapport à l'acide gras dimère) et dont la proportion en acides gras monomères est inférieure à 25 % en poids (par rapport à l'acide gras dimère) |
| b) 0 à 25 moles % | d'acides gras dicarboxyliques aliphatiques avec 6 à 22 atomes de C |
| c) 0 à 30 moles % | d'acides gras aminocarboxyliques et/ou de leurs lactames comportant 6 à 22 atomes de C et |
| d) 20 à 55 moles % | de diamines aliphatiques, aromatiques et/ou cycliques comportant 2 à 40 atomes de C, faisant partie de la classe des diamines di-primaires, des diamines comprenant des groupes amino secondaires avec des substituants alkyle ne comportant pas plus de 8 atomes de C sur l'atome de N et/ou de diamines hétérocycliques aptes à la formation double d'amides |
| e) 0 à 30 moles % | de polyétherdiamines. |

2. Mélanges de colle à fusion selon les revendications 1 et 2, caractérisés en ce qu'ils se composent de
10 à 90 % en poids de polyamide I
90 à 10 % en poids de polyamide II
0 à 20 % en poids de polyéthylène et
0 à 20 % en poids d'autres adjuvants.

3. Mélanges de colle à fusion selon les revendications 1 et 2, caractérisés en ce qu'aussi bien dans le polyamide I que dans le polyamide II, l'excès d'acide ou de base ne représente pas plus de 10 équivalents-pour cent de l'ensemble des groupes fonctionnels, les résines à terminaison basique possédant de préférence un indice d'amine situé dans la plage allant jusqu'à 50, de préférence compris entre 2 et 20 et, en particulier, entre 2 et 15, tandis que les résines à terminaison acide possèdent de préférence un indice d'acidité situé dans la plage allant jusqu'à 20, de préférence compris entre 2 et 10.

4. Mélanges de colle à fusion selon les revendications 1 à 3, caractérisés en ce que les polyamides I et II présentent des groupes terminaux de même type.

5. Mélanges de colle à fusion selon les revendications 1 à 4, caractérisés en ce que les polyamides I et II possèdent un poids moléculaire compris dans l'intervalle allant de 8.000 à 12.000.

6. Mélanges de colle à fusion selon les revendications 1 à 5, caractérisés en ce qu'ils possèdent un point de ramollissement (ASTM E-28) situé dans la plage allant de 60 à 200 °C, de préférence de 80 à 150 °C.

7. Mélanges de colle à fusion selon les revendications 1 à 6, caractérisés en ce que les polyamides I et II renferment comme composant (a) des acides gras dimères techniques dont la proportion d'acides gras trimères est inférieure à 10 moles %, de préférence inférieure à 5 moles %, éventuellement en plus de quantités limitées d'acides monocarboxyliques.

8. Mélanges de colle à fusion selon les revendications 1 à 7, caractérisés en ce que les polyamides I et II renferment comme composant (b) des acides dicarboxyliques aliphatiques saturés comportant 6 à 12 atomes de C.

9. Mélanges de colle à fusion selon les revendications 1 à 8, caractérisés en ce que les polyamides I et II renferment comme composant (c) des diamines comportant 2 à 20 atomes de C, qui sont en particulier des diamines di-primaires, inférieures, à chaîne droit ou ramifiés, aliphatiques ou monocycliques ou des diamines monocycliques, hétérocycliques.

10. Mélanges de colle à fusion selon les revendications 1 à 9, caractérisés en ce que l'on met en oeuvre comme polyéthylène, un polyéthylène linéaire ou éventuellement ramifié ou anoxydé à caractère cireux et possédant un point de fusion situé dans la plage allant de 90 à 110 °C et un poids moléculaire compris dans l'intervalle de 250 à 8.000, de préférence de 300 à 2.000.

11. Mélanges de colle à fusion selon les revendications 1 à 10, caractérisés en ce que l'on met en oeuvre comme adjuvants, des plastifiants, solvants, améliorants de compatibilité, pigments, antivieillissement, agglutinants et/ou charges.